# EUROPEAN PATENT SPECIFICATION

(11) **EP 0 157 341 B1**
(45) Date of publication and mention of the grant of the patent: **09.06.1993**
(21) Application number: 85103569.1
(22) Date of filing: 26.03.1985
(51) Int. Cl.: G06F 12/06

(54) **Memory interface circuit**
Speicherschnittstellenschaltung
Circuit d'interface de mémoire

(30) Priority: 04.04.1984 JP 68273/84
(43) Date of publication of application: 09.10.1985
(73) Proprietor: Ascii Corporation, Minato-ku Tokyo (JP)
(72) Inventor: Ishii, Takatoshi, Oome-shi Tokyo (JP); Yamashita, Ryozo, Takatu-ku Kawasaki-shi Kanagawa (JP)
(74) Representative: Lehn, Werner, Dipl.-Ing.

(56) References cited:
- EP-A- 0 072 219
- ELECTRONIQUE INDUSTRIELLE, no. 16, 15th May 1981, pages 75-80, Paris, FR; A. DIOU: "Augmentez la capacité d'adressage de votre microprocesseur"
- AFIPS CONFERENCE PROCEEDINGS NCC, Houston, Texas, 7th-10th June 1982, pages 21-28, Arlington, US; "Practical CMOS microprocessor systems"
- NEW ELECTRONICS, vol. 15, no. 6, March 1982, page 25, Southend, GB; R.M. RILEY: "Simple extension of MEK6800D2 r.a.m. by 256 bytes"

## Description

### 1. Field of the Invention

The present invention relates to a multi-function microprocessor and, in particular, to a memory interface circuit.

### 2. Description of the Prior Art

Conventionally, a microprocessor (which will be referred to as CPU hereinafter) employs an RAM (Random Access Memory) as a memory device for storing programs and data.

EP-A-0072219 shows a memory addressing system comprising chip select signal generation means and ROM/RAM select means using several integrated circuits.

Also, in the prior art, thanks to the advanced LSI technology, a CPU and its peripheral circuit elements can be combined into a single IC package to form a multi-function CPU which is now under use.

Systems using the above-mentioned CPU ranges over a very wide variety of applications covering from a small-scale personal computer up to a large-scale office-use computer. According to the kinds of the systems used, the types of the RAMs used include a D-RAM (Dynamic RAM), an S-RAM (Static RAM), a CMOS-RAM and the like.

Also, in the prior art, it is necessary to add unique RAM interface circuits in the adjacency of the respective CPU with respect to RAM elements used.

In the above-mentioned multi-function CPU, when, for example, only a memory interface circuit for D-RAM is included therein as a memory interface, there is a problem that other RAMs than the D-RAM and any ROMs (Read Only Memories) cannot be connected thereto. To solve this problem, it has been suggested that a plurality of interface circuits of different kinds be incorporated in the above-mentioned multi-function CPU. However, this suggestion can not be realized practically because of the limited number of pins or terminals contained in an IC package. Therefore, in the above-mentioned multi-function CPU, there is still left a problem that a plurality of RAMs of different kinds and a plurality of ROMs cannot be connected thereto at the same time.

### SUMMARY OF THE INVENTION

In view of the foregoing situations of the prior art techniques, the present invention aims at eliminating or at least reducing the drawbacks found in the above-mentioned conventional memory interface circuit.

Accordingly, it is a primary object of the invention to provide an improved memory interface circuit which is capable of connecting a plurality of RAMS of different kinds with a multi-function CPU by specifying modes and also which can be connected with a plurality of ROMs.

According to the invention, there is provided a memory interface circuit for use in a multifunction CPU including a CPU (microprocessor) and its peripheral circuit elements, characterized by a plurality of memory address signal and memory control signal generation means, each specific for a predetermined mode of operating a memory interface and thus for generating the appropriate memory address and memory control signals; and mode selection means for selecting one of said plurality of memory address signal and memory control signal generation means. Thus a multi-function CPU can be provided in which one CPU and its peripheral circuit elements are combined into a single IC package while in said multi-function CPU a plurality of memory address signals are generated and one of said plurality of memory address signals can be specified.

The above and other objects and advantages of the invention may be readily ascertained by referring to the following detailed description and appended drawings.

### BRIEF DESCRIPTION OF THE DRAWINGS

Fig. 1 shows illustratively in block diagrams the memory configurations in respective systems and the memory contents used therein that can be employed in connection with the present invention;
Fig. 2 is a block diagram of one embodiment of memory interface circuit constructed in accordance with the invention, illustrating a case in which the memory configuration for Mode 0 shown in Fig. 1 is employed;
Fig. 3 is a block diagram of a further embodiment of memory interface circuit of the invention, illustrating a case in which the memory configuration for Mode 1 is employed;
Fig. 4 is a block diagram of a further embodiment of memory interface circuit of the invention, illustrating a case in which the memory configuration for Mode 2 in Fig. 2 is employed;
Fig. 5 is a diagrammatic view of the configurations of CMOS RAMs (8 K byte) to be connected to the interface lines shown in Fig. 5;
Fig. 6 is a block diagram of a further embodiment of memory interface circuit of the invention, illustrating a case in which the memory configuration for Mode 3 in Fig. 1 is employed;
Fig. 7 is a diagrammatic view of the configuration of a 2K-byte S-RAM to be connected with the interface line as shown in Fig. 6;
Fig. 8 is a schematic block diagram of a further embodiment of memory interface circuit of the invention; and
Fig. 9 is a table to illustrate the functions of the respective output pins or terminals of the above memory interface circuit with respect to the respective modes.

### DETAILED DESCRIPTION OF PREFERRED EMBODIMENTS OF THE INVENTION

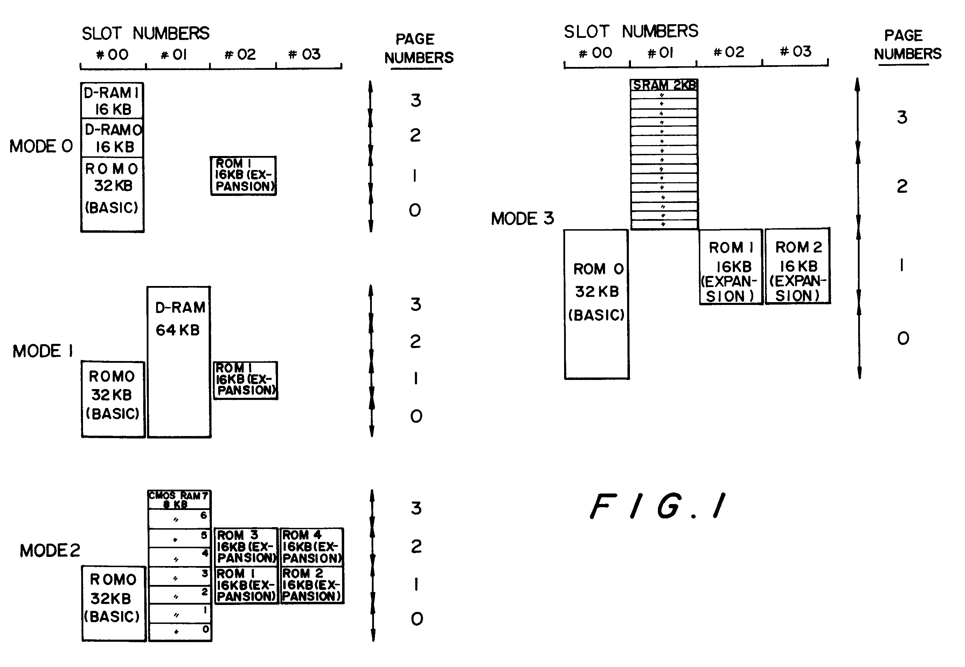

Fig. 1 illustrates in block forms the memory configurations in their respective systems and the memory contents used therein that can be employed in connection with the invention. As typical examples, four kinds of modes, that is, Mode 0 - Mode 3 are shown in this figure.

In the illustrated case, the kinds of RAMs used are determined or varied according to the respective modes, or, Mode 0 - Mode 3, and thus in the prior art techniques four kinds of memory interface circuits which are different from one another are necessary. However, according to the invention, only one memory interface circuit is sufficient for this purpose. Here, it should be noted that a ROM 0 (32K-byte) and an expansionary ROM 1 (16K-byte) are used in common in the respective modes.

Mode 0 is a medium-scale standard system that uses a D-RAM element of 16K x 1 bit and is provided with an RAM area of 32K byte.

Mode 1 is a large-scale system using a D-RAM element of 64K x 1 bit and is provided with an RAM area of 64K byte.

Mode 2 is a large-scale system which employs 8K-byte CMOS-RAM element or PSEUDO S-RAM and is provided with expandable ROM 2, ROM 3 and ROM 4.

Mode 3 is a small-scale system which employs an S-RAM element of 2K-byte and is equipped with an expandable ROM 2. This small-scale system can be used in a hand-held personal computer or the like.

In each of the above-mentioned modes, namely, M 0 - M 3, there are provided pages 0 - 3, while slots #00, #01, #02 and #03 are established for each of these four pages. These slots are to be specified for each of the above-mentioned pages.

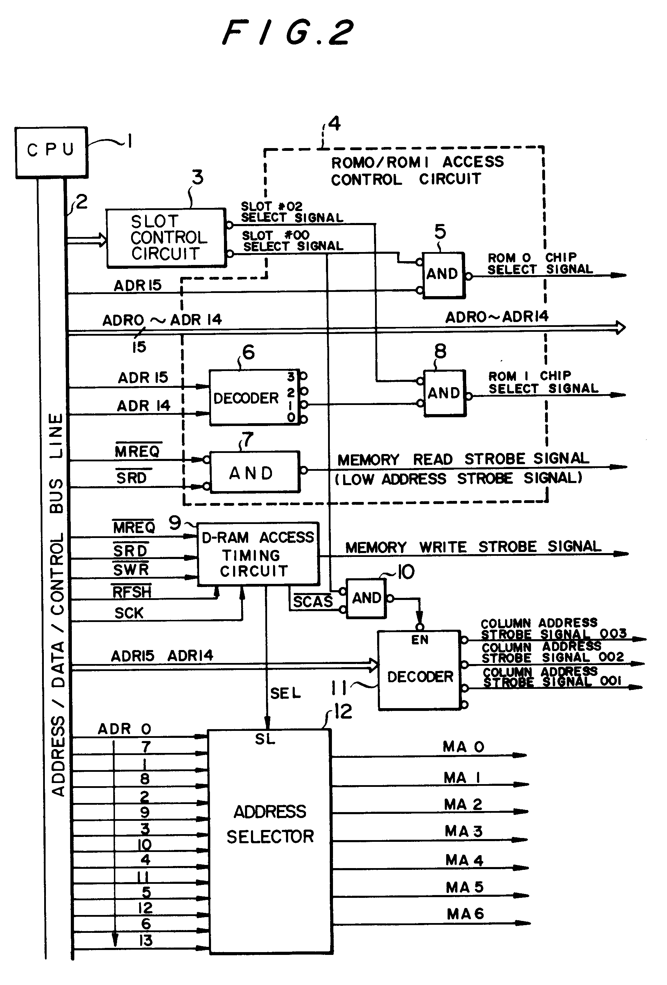

Fig. 2 is a block diagram of a memory interface circuit of the invention, illustrating a case in which the memory configuration for Mode 0 shown in Fig. 1 is employed.

In this figure, there are included a CPU 1 and a bus line 2 for addresses, data and control. A slot control circuit 3 is used to specify slots for each of pages 0 - 3 in Mode 0.

A ROM 0/ROM 1 access control circuit 4 is used to generate interface signals for ROM 0 (32K bytes for BASIC) and ROM 1 (Expansionary 16K bytes) both of which are commonly used in the respective modes, and this circuit 4 includes AND gates 5, 7, 8 as well as an address decoder 6. It should be noted here that circuits corresponding to this ROM 0/ROM 1 access control circuit 4 are respectively contained in the memory interface circuits of Modes 1, 2 and 3 as well.

The above-mentioned AND gate 5 is used to generate chip select signals of ROM 0, AND gate 7 is dedicated to generating memory strobe signals, and AND gate 8 is adapted to generate chip select signals of ROM 1.

The lower half section of Fig. 2 is an interface circuit for a 16K-bit D-RAM used only in Mode 0, and it comprises a D-RAM access timing circuit 9, an AND gate 10, a decoder 11 for generating column address strobe signals and a 7-bit address selector 12 for switching low addresses and column addresses. In Fig. 2, reference character MA designates a low/column address line.

Next, we will describe the operation of the memory interface circuit shown in Fig. 2.

ROM 0 packaged in Slot #00 in Mode 0 shown in Fig. 1 is to be accessed by the address lines ADR 0 - ADR 14, chip select signals of ROM 0 and memory strobe signals shown in Fig. 2, while Expansionary ROM 1 packaged in Page 1 of Slot #02 in Mode 0 is to be accessed by the address lines ADR 0 - ADR 13, chip select signals of ROM 1 and memory strobe signals shown in Fig. 2.

In the memory interface circuit for the above-mentioned mode or M 0, the read/write operation of D-RAM is controlled by seven low/column address lines MA 0 - MA 6, a low address strobe signal (which is the same as the above-mentioned memory strobe signal), two column address strobe signals 002, 003, and a memory write strobe signal. Column Address Strobe Signal 002 is used when the D-RAM (16K-byte) in Page 2 is to be accessed, while Column Address Strobe Signal 003 is used when the D-RAM (16K-byte) in Page 3 is to be accessed.

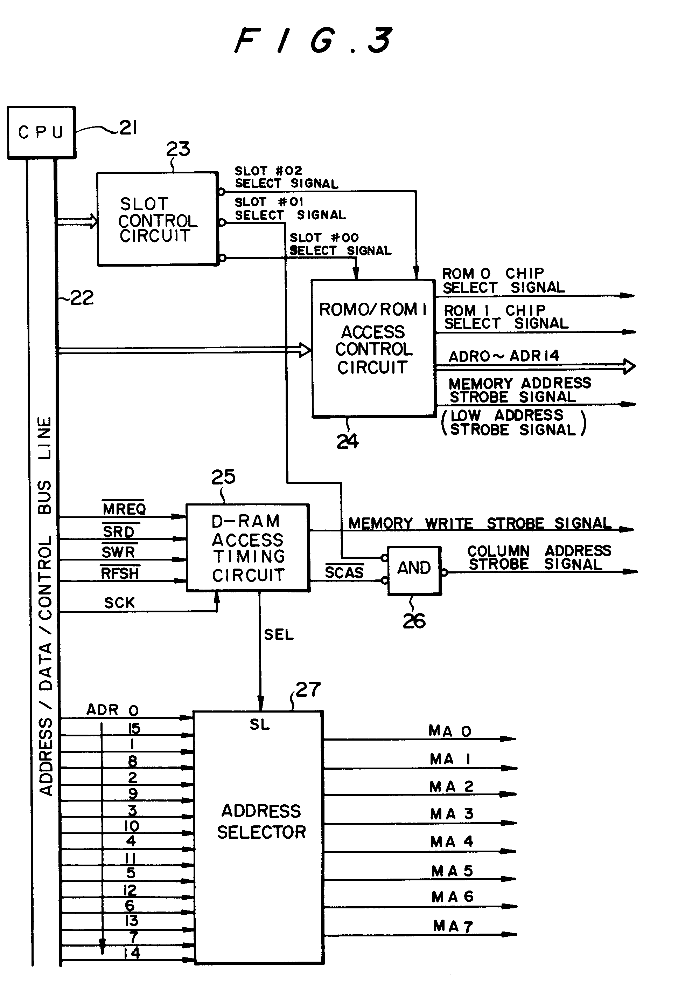

Fig. 3 is a block diagram of the memory interface circuit of the invention, illustrating a case in which the memory configuration for Mode 1 shown in Fig. 1 is employed.

In this figure, there are included a CPU 21 and an address/data/control bus line 22. A slot control circuit 23 is used to specify slots for each of Pages 0 - 3 in Mode 1. A ROM 0/ROM 1 access control circuit 24 (corresponding exactly to block 4 of Figure 2) is dedicated to generating interface signals for ROM 0 (32K-byte for BASIC) and ROM 1 (Expansionary 16K bytes) both of which are used commonly in the respective modes.

The lower half section of Fig. 3 constitutes an interface circuit for a 64K-byte D-RAM which is used only in Mode 1. In other words, it comprises a D-RAM access timing circuit 25, an AND gate 26 for generating column address strobe signals, and an 8-bit address selector 27 for switching low addresses and column addresses.

Next, we will describe the operation of the memory interface circuit shown in Fig. 3.

In the memory interface circuit in Fig. 3, the read/write operation of the 64K-byte D-RAM of Slot #01 in Mode 1 is controlled by eight low/column address lines 0 - 7, low address strobe signals, a column address strobe signal 001 and a memory write strobe signal.

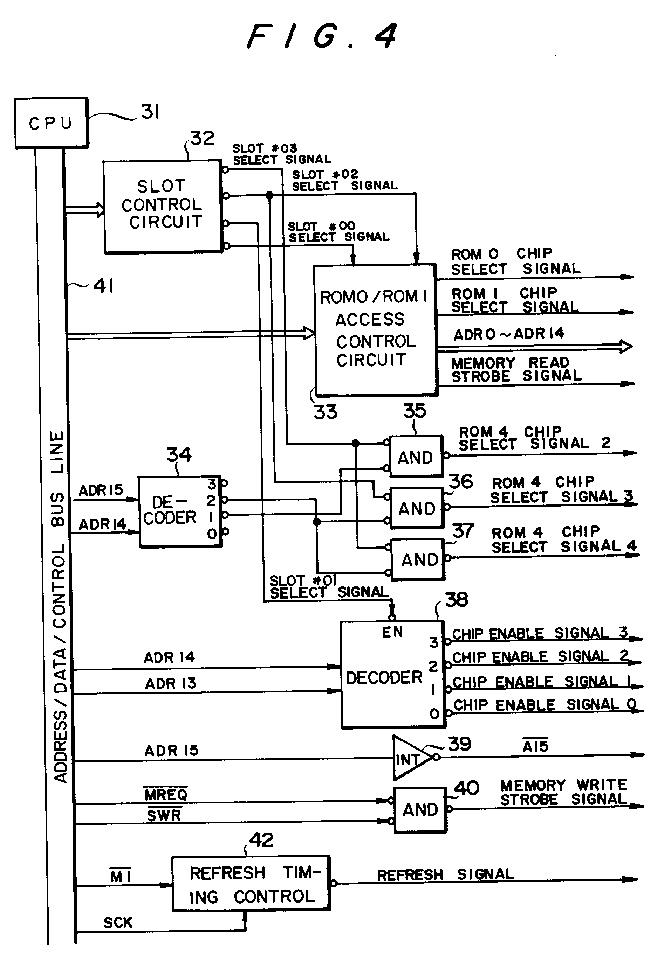

Now, Fig. 4 is a block diagram of the memory interface circuit of the invention, illustrating a case in which the memory configuration for Mode 2 is employed.

In this Figure, there are included a CPU, an address/data/control bus line 41, a slot control circuit 32, and a ROM 0/ROM 1 access control circuit 33 used commonly in the respective modes. Control circuit 33 corresponds exactly to circuit 4 of Figure 2.

The central and lower sections of Fig. 4 constitute a memory interface circuit for CMOS-RAMs 1 - 7 and ROMs 2, 3, 4 which are used only in Mode 2. This memory interface circuit comprises an address decoder 34, AND circuits 35, 36, 37 for generating the respective chip select signals 2, 3, 4 of Expansionary ROMs 2, 3, 4, a decoder 38 for generating chip enable signals 0 - 3 for an 8K-byte S-RAM, an inverter 39, and an AND gate 40 for generating a memory write strobe signal. Reference numeral 42 designates a refresh timing control circuit to generate a refresh signal for an 8K-byte PSEUDO S-RAM.

Next, we will discuss the operation of the memory interface circuit of the invention in Fig. 4.

Expansionary ROMs 2, 3, 4 in Mode 2 are respectively accessed by ROM chip select signals 2, 3, 4 outputted respectively from AND Gates 35, 36, 37, fourteen address lines ADRs 0 - 13, and a memory strobe signal.

Also, the read/write operation of the 8K-byte CMOS-RAM packaged in Slot #01 in Mode 2 is controlled by a signal that is inverted from a signal of Address Line ADR 15 by Inverter 39, a memory read strobe signal, a memory write strobe signal, thirteen address lines ADRs 0 - 12, and four chip enable signals 0 - 4 to be outputted from Decoder 38.

When the 8K-byte PSEUDO S-RAM element is employed, a refresh signal should be used.

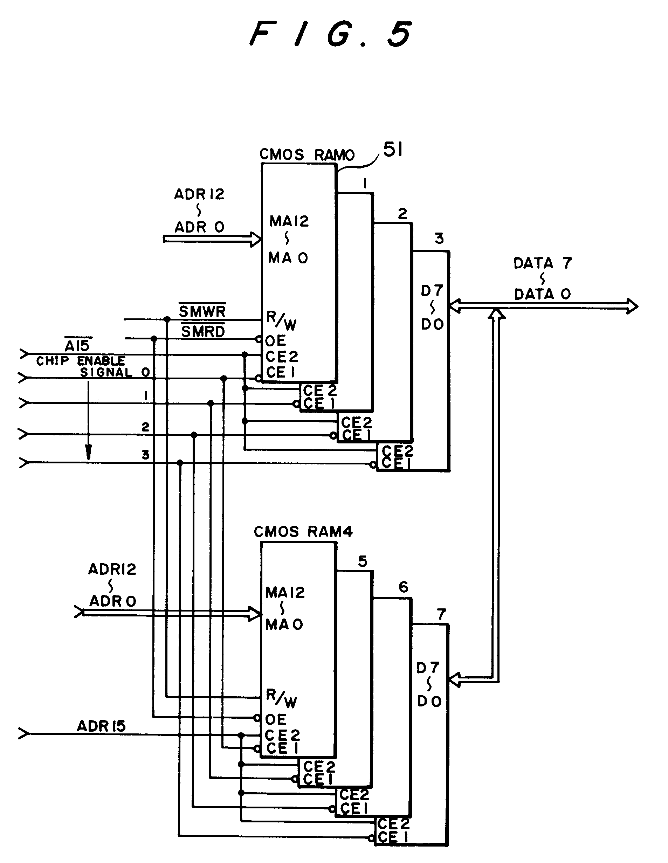

Fig. 5 illustrates the configuration of a CMOS-RAM (8K-byte) to be connected to the interface line shown in Fig. 4.

As shown in Fig. 5, the chip enable signals 0 - 3 of the memory interface are supplied to the chip enable 1 terminal or CE 1 of CMOS-RAM, while the signal of Address Line ADR or the inverted signal thereof is supplied to the chip enable 2 terminal or CE 2 of CMOS-RAM. The above-mentioned matrix combination of the terminals CE 1 and CE 2 enables to select a large number of memories with a small number of signals.

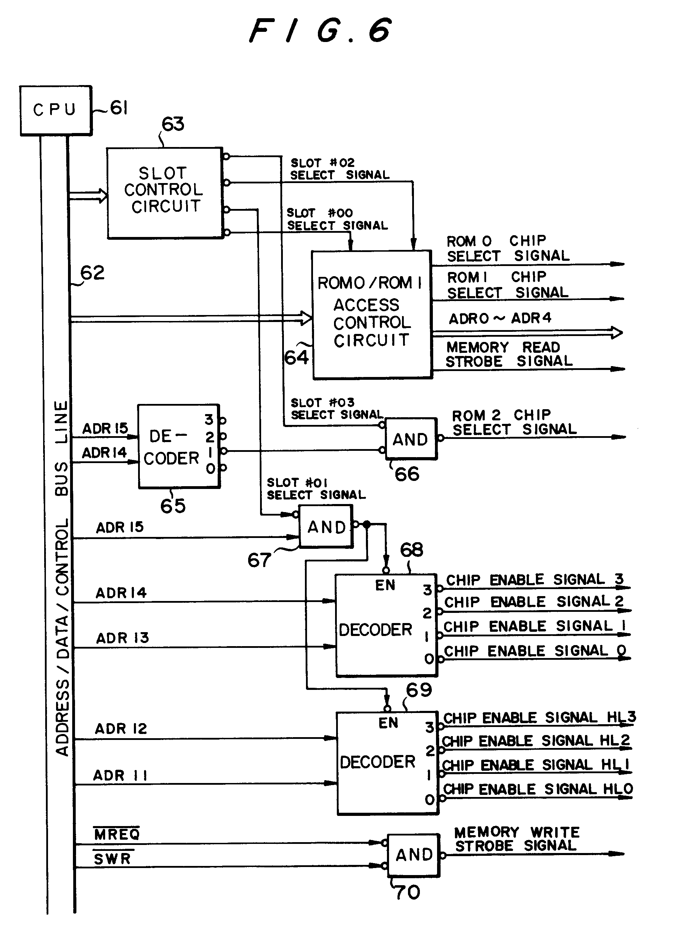

Fig. 6 is a block diagram of the memory interface circuit of the invention, illustrating a case in which the memory configuration for Mode 3 shown in Fig. 1 is employed.

In this figure, there are included a CPU 61 and an address/data/control bus line 62. Slot control circuit 63 is used to specify slots for each of Pages 0 - 3 in Mode 3. ROM 0/ROM 1 Access control Circuit 64 (corresponding exactly to circuit 4 of Figure 2) is dedicated to generating interface signals for ROM 0 (32K bytes for BASIC) and ROM 1 (Expansionary 16K bytes) both of which are used commonly in the respective modes.

The central and lower sections of the memory interface circuit in Fig. 6 constitute an interface circuit for the 2K-byte S-RAM and ROM 2 used only in Mode 3.

This interface circuit comprises an address decoder 65, an AND gate to generate the chip select signal 2 for ROM 2, an AND gate 67, decoders 68, 69 to generate chip enable signals 0 - 3 and HL 0 - 3 for the 2K-byte S-RAM respectively, and an AND gate 70 to generate a memory write strobe signal.

Now, we would like to explain as to the operation of the memory interface circuit of the invention shown in Fig. 6.

Expansion ROM 2 of Page 1 of Slot #03 in Mode3 is accessed by a chip select signal for ROM 2, fourteen address lines ADRs 0 - 13, and a memory read strobe signal.

The read/write operation of the 2K-byte S-RAMS packaged in Pages 2 and 3 of Slot #01 in Mode 3 are controlled by eleven address lines ADRs 0 - 10, eight chip enable signals 0 - 3 and HL 0 - 3, and a memory write strobe signal.

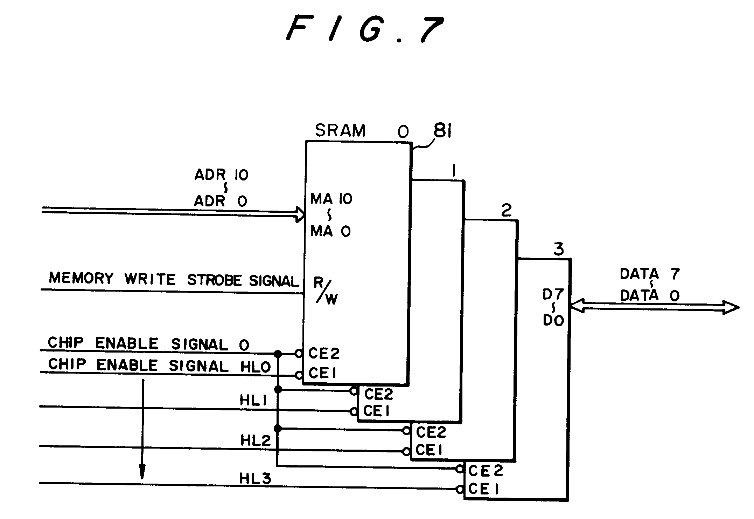

Fig. 7 illustrates the configuration of the 2K-byte S-RAM to be connected to the interface line in Fig. 6.

As shown in Fig. 7, the chip enable 1 terminal CE 1 of S-RAM is used to connect one of the chip enable signals HL 0 - 3 on the LOW side, while the chip enable 2 terminal CE 2 thereof is used to connect one of the chip enable signals 0 - 3 on the HIGH side. Here again, as in Fig. 5, the terminals CE 1 and CE 2 can be combined in a matrix manner, so that 16 memories can be selectively specified by 8 chip enable signals.

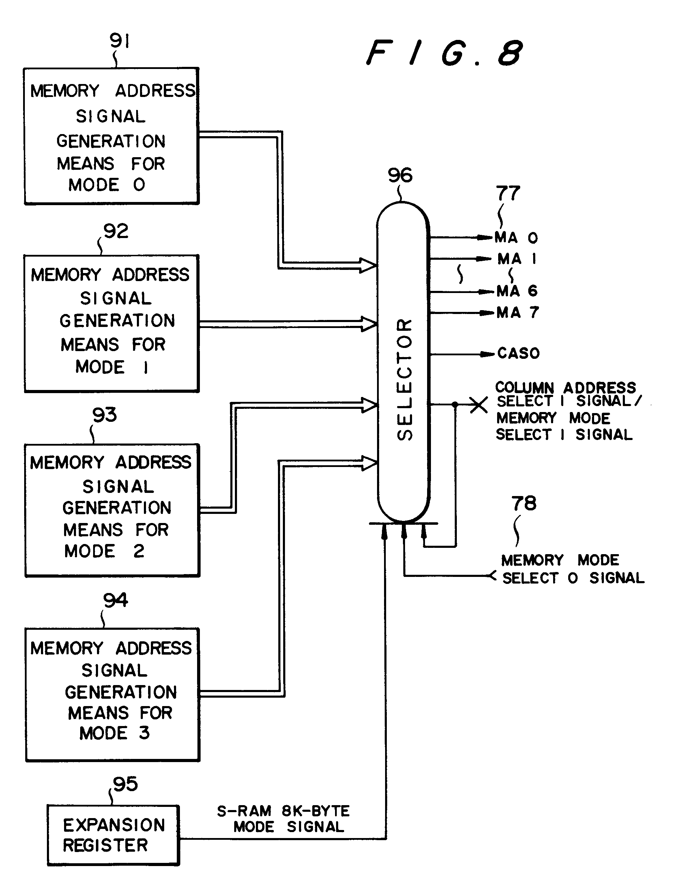

Fig. 8 illustrates a general block diagram of one embodiment of the memory interface circuit of the invention.

In Fig. 8, there are included a memory address signal generation means 91 for Mode 0, a memory address signal generation means 92 for Mode 1, a memory address signal generation means 93 for Mode 2, a memory address signal generation means 94 for Mode 3, an expansion register 95, and a selector 96.

The memory address signal generation means 91 for Mode 0 is provided with the same functional operation as the circuit shown in Fig. 2, the memory address signal generation means 92 is provided with the same functional operation as the circuit shown in Fig. 3, the memory address signal generation means 93 for Mode 2 is provided with the same functional operation as the circuit shown in Fig. 4, and the memory address signal generation means 94 for Mode 3 is provided with the same functional operation as the circuit shown in Fig. 6.

Expansion Register 95 is to be established by software and is actually mounted within the multi-function CPU. Selector 96 selects one of the outputs of the memory interface circuits in the respective modes according to a memory mode select signal 0 supplied from an external source, a memory mode select signal 1, and an S-RAM 8K-byte mode signal from Expansion Register 95, and then it outputs the selected one as a memory interface signal.

Then, a memory interface signal necessary for a given mode is selected by Selector 96 and is output to each of memory elements. A memory interface signal which is commn in the respective modes is not described here. The memory interface signals are selected by a memory select signal 0 externally inputted, the S-RAM 8K-byte mode signal from Expansion Register 95 and the memory select 1 signal common for input and output, while they are output in the form of ten memory interface signals (that is, signals for low/column address lines 0 - 7, a column address 0 signal, and a memory mode select 1 signal).

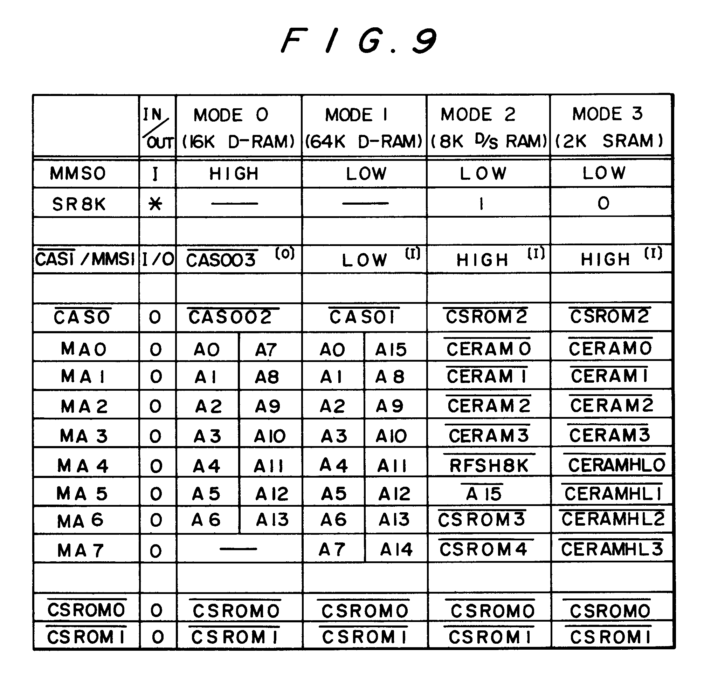

Fig. 9 is a table to illustrate the functions of the respective output pins of the memory interface of the invention with respect to the respective modes.

First, we will describe the conditions necessary to specify the respective modes, that is, Mode 0 - Mode 3.

To specify Mode 0, a memory mode select signal 0 (MMS 0) may be set in the "HIGH".

To specify Mode 1, the above memory mode select singal 0 (MMS 0) may be set in the "LOW" and at the same time a memory mode select signal 1 (MMS 1) may be set in the "LOW".

To specify Mode 2, the memory mode select signal 0 (MMS 0) may be set in the "LOW", the memory mode select signal 1 (MMS 1) may be set in the"HIGH", and an S-RAM 8K-byte mode signal (SR8K) may be set in the "1".

To specify Mode 3, the memory mode select signal 0 (MMS 0) may be set in the "LOW", the memory mode select signal 1 (MMS 1) may be set in the "HIGH", and the S-RAM 8K-byte mode signal (SR8K) may be set in the "0".

A terminal for the column address select 1 signal/memory mode select 1 signal shown in Fig. 8 is adapted to operate as a column address strobe signal 003 when the memory mode select signal 0 (MMS 0) is in the "HIGH", while it is adapted to operate as an input terminal for the memory mode select signal 1 (MMS 1) when the memory mode select signal 0 (MMS 0) is in the "LOW". Thus, four memory address modes can be specified by using an exclusive memory mode select terminal (pin) and an associated remaining terminal (pin). As a result of this, the invention is capable of performing the same functions as those of several kinds of memory interface circuits.

In Fig. 9, reference character CAS designates a column address select signal, CSROM represents a chip select signal of ROM, and CERAM denotes a chip enable signal of RAM.

As discussed hereinbefore, the present invention is advantageous over the prior art circuits in that various kinds of RAM elements or ROM elements can be directly connected to a multi-function CPU. Thanks to this advantage, since the need to add an external memory access circuit is eliminated, a compact microcomputer sytem can be obtained. Also, according to the invention, the number of terminals or pins required for the above-mentioned functions can be reduced to a minimum.

## Claims

1. A memory interface circuit for use in a multifunction CPU including a CPU (microprocessor) (1,21,31,61) and its peripheral circuit elements, characterized by a plurality of memory address signal and memory control signal generation means (91,92,93,94), each specific for a predetermined mode of operating a memory interface and thus for generating the appropriate memory address and memory control signals; and mode selection means (78,95,96) for selecting one of said plurality of memory address signal and memory control signal generation means.

2. The memory interface circuit as claimed in claim 1, characterized in that a portion of a terminal included in said mode selection means (78,95,96) is adapted to supply an output signal in a predetermined mode and, in other modes than said predetermined mode, to receive an input signal and also to specify another mode.

3. The memory interface circuit as claimed in claim 1, characterized in that said mode selection means is composed of an expansion register (95) provided in the interior of said multi-function CPU.

4. The memory interface circuit as claimed in claim 1, characterized in that said memory address signals comprise a memory address signal for a D-RAM.

5. The memory interface circuit as claimed in claim 1, characterized in that one of said memory address signals selected by a mode selection means (91) is operable to select from a plurality of D-RAMs.

6. The memory interface circuit as claimed in Claim 1, characterized in that one of said memory address signals is a memory address control signal for a static memory.

7. The memory interface circuit as claimed in Claim 1, characterized in that one of said memory address signals selected by a mode specification means (94) is a memory address signal operable to select from a plurality of static memories.

8. The memory interface circuit as claimed in Claim 7, characterized in that the selection of said static memories is specified in a matrix manner so that a large number of memory elements can be selected by using a small number of terminals.

## Patentansprüche

1. Speicherschnittstellenschaltung zur Benutzung in einer Vielfunktions-CPU einschließlich einer CPU (Mikroprozessor) (1, 21, 31, 61) und seiner peripherischen Schaltungselemente,
**gekennzeichnet** durch
eine Vielzahl von Speicheradress-Signal- und Speichersteuersignal-Erzeugungseinrichtungen (91, 92, 93, 94), wobei jede spezifisch für einen vorbestimmten Betriebsmodus zum Betreiben einer Speicherschnittstelle ist und somit zum Erzeugen der geeigneten Speicheradresse und Speichersteuersignale; und
eine Modusauswahleinrichtung (78, 95, 96) zum Auswählen einer der Vielzahl von Speicheradress-Signal- und Speichersteuersignal-Erzeugungseinrichtungen.

2. Speicherschnittstellenschaltung nach Anspruch 1,
dadurch **gekennzeichnet,** daß ein Teil eines Anschlusses beinhaltet in der Modusauswahleinrichtung (78, 95, 96) darauf ausgelegt ist, ein Ausgabesignal in einem vorbestimmten Modus auszugeben und in anderen Modi als dem vorherbestimmten Modus ein Eingabesignal zu empfangen und ebenfalls einen anderen Modus zu spezifizieren.

3. Speicherschnittstellenschaltung nach Anspruch 1,
dadurch **gekennzeichnet,** daß die Modusauswahleinrichtung aus einem Erweiterungsregister (95) vorgesehen im Inneren der Vielfunktions-CPU besteht.

4. Speicherschnittstellenschaltung nach Anspruch 1,
dadurch **gekennzeichnet,** daß die Speicheradress-Signale ein Speicheradressensignal für ein D-RAM umfassen.

5. Speicherschnittstellenschaltung nach Anspruch 1,
dadurch **gekennzeichnet,** daß eines der Speicheradreßsignale ausgewählt durch eine Modusauswahleinrichtung (91) dazu benutzt werden kann, aus einer Vielzahl von D-RAMs eine Auswahl zu treffen.

6. Speicherschnittstellenschaltung nach Anspruch 1, dadurch **gekennzeichnet,** daß eines der Speicheradress-Signale ein Speicheradressensteuersignal für einen statischen Speicher ist.

7. Speicherschnittstellenschaltung nach Anspruch 1,
dadurch **gekennzeichnet,** daß eines der Speicheradreßsignale ausgewählt durch eine Modusspezifizierungseinrichtung (94) ein Speicheradreßssignal ist, daß benutzt werden kann, um eine Auswahl aus einer Vielzahl statischer Speicher zu treffen.

8. Speicherschnittstellenschaltung nach Anspruch 7,
dadurch **gekennzeichnet,** daß die Auswahl der statischen Speicher in Matrizenart spezifiziert ist, so daß eine große Anzahl von Speicherelementen ausgewählt werden kann unter Benutzung einer kleinen Anzahl von Anschlüssen.

## Revendications

1. Circuit d'interface de mémoire destiné à servir dans une unité centrale de traitement CPU multifonction incluant une unité CPU (microprocesseur) (1,21,31,61) et ses éléments de circuit périphériques, caractérisé par une pluralité de moyens générateurs de signaux d'adresse de mémoire et de signaux de commande de mémoire (91,92,93,94) dont chacun est spécifique pour un mode prédéterminé de fonctionnement d'une interface de mémoire et ainsi pour engendrer les signaux d'adresse de mémoire et de commande de mémoire appropriés; et un moyen de sélection de mode (78,95,96) pour sélectionner un de ladite pluralité de moyens générateurs de signaux d'adresse de mémoire et de signaux de commande de mémoire .

2. Circuit d'interface de mémoire selon la revendication 1, caractérisé en ce qu'une partie d'une borne incluse dans ledit moyen de sélection de mode (78,95,96) est adaptée pour fournir un signal de sortie dans un mode prédéterminé et, dans les autres modes que ledit mode prédéterminé, pour recevoir un signal d'entrée et également pour spécifier un autre mode.

3. Circuit d'interface de mémoire selon la revendication 1, caractérisé en ce que ledit moyen de sélection de mode est constitué d'un registre d'extension (95) prévu à l'intérieur de ladite unité CPU multifonction.

4. Circuit d'interface de mémoire selon la revendication 1, caractérisé en ce que lesdits signaux d'adresse de mémoire comprennent un signal d'adresse de mémoire pour une mémoire vive dynamique D-RAM.

5. Circuit d'interface de mémoire selon la revendication 1, caractérisé en ce qu'un desdits signaux d'adresse de mémoire sélectionnés par un moyen de sélection de mode (91) peut servir à sélectionner une mémoire parmi une pluralité de mémoires D-RAM.

6. Circuit d'interface de mémoire selon la revendication 1, caractérisé en ce qu'un desdits signaux d'adresse de mémoire est un signal de commande d'adressage de mémoire pour une mémoire statique.

7. Circuit d'interface de mémoire selon la revendication 1, caractérisé en ce qu'un desdits signaux d'adresse de mémoire sélectionné par un moyen de spécification de mode (94) est un signal d'adresse de mémoire servant à sélectionner une mémoire parmi une pluralité de mémoires statiques.

8. Circuit d'interface de mémoire selon la revendication 7, caractérisé en ce que la sélection desdites mémoires statiques est spécifiée sous forme matricielle de telle sorte qu'un grand nombre d'éléments de mémoire peuvent être sélectionnés par la mise en oeuvre d'un petit nombre de bornes.
